# EUROPÄISCHE PATENTANMELDUNG

(11) **EP 3 070 668 A1**
(43) Veröffentlichungstag der Anmeldung: **21.09.2016**
(21) Anmeldenummer: 15159314.2
(22) Anmeldetag: 17.03.2015
(51) Int. Cl.: G06Q 99/00, A44C 15/00, G08B 5/36, G06Q 50/00, H05B 33/08, H05B 37/02

(54) **Signalgerät**

(71) Anmelder: Miglar, Robert, 8330 Feldbach (AT)
(72) Erfinder: Miglar, Robert, 8330 Feldbach (AT)
(74) Vertreter: Rothkopf, Ferdinand

(57) **Zusammenfassung**

Bei einem Signalgerät zur Anzeige einer Annäherungsbereitschaft eines Benutzers des Signalgeräts zu einer anderen Person, mit einer ersten Anzeigevorrichtung sowie einer zugehörigen ersten Schaltvorrichtung zum Schalten der ersten Anzeigenvorrichtung und mit mindestens einer weiteren Anzeigevorrichtung sowie einer zugehörigen weiteren Schaltvorrichtung zum Schalten der mindestens einen weiteren Anzeigevorrichtung, führt ein Betätigen der ersten Schaltvorrichtung zu einem Einschalten der zugehörigen ersten Anzeigevorrichtung und zugleich zu einem Betätigen der zumindest einen weiteren Schaltvorrichtung.

## Beschreibung

Die Erfindung betrifft ein Signalgerät zur Anzeige einer Annäherungsbereitschaft eines Benutzers des Signalgeräts zu einer anderen Person, mit einer ersten Anzeigevorrichtung sowie einer zugehörigen ersten Schaltvorrichtung zum Schalten der ersten Anzeigenvorrichtung und mit mindestens einer weiteren Anzeigevorrichtung sowie einer zugehörigen weiteren Schaltvorrichtung zum Schalten der mindestens einen weiteren Anzeigevorrichtung. Ferner betrifft die Erfindung ein Verfahren zum Anzeigen einer Annäherungsbereitschaft eines Benutzers eines Signalgeräts zu einer anderen Person, insbesondere eines Signalgeräts der oben genannten Art, mit den Schritten: Anzeigen eines Signals an einer ersten Anzeigevorrichtung sowie Schalten einer zugehörigen ersten Schaltvorrichtung und Anzeigen eines Signals an mindestens einer weiteren Anzeigevorrichtung sowie Schalten einer zugehörigen weiteren Schaltvorrichtung.

Viele Menschen bzw. Personen haben, weil sie gehemmt, schüchtern oder zaghaft sind, Schwierigkeiten damit, anderen Personen mitzuteilen, dass Sie durchaus bereit sind, eine Annäherung bzw. eine Kontaktaufnahme von anderen Personen zuzulassen. Vor allem, wenn die anderen Personen in der Öffentlichkeit, wie beispielhaft dem Öffentlichen Nahverkehr, bei Veranstaltungen, wie Tanzveranstaltungen, bei Ausflügen oder auch im Urlaub angetroffen werden. In der Öffentlichkeit ist es besonders schwierig, anderen Personen auf korrekte, unmissverständliche Weise zu signalisieren, dass bei einer Person Annäherungsbereitschaft, etwa eine Flirtbereitschaft, oder eben keine Annäherungsbereitschaft besteht.

Es ist allgemein bekannt, dass etwa bei einer Partnervermittlungsveranstaltung mittels eines rot blinkenden Herzens, eines Stickers oder mittels eines Aufklebers als Hilfsmittel eine Annäherungsbereitschaft signalisiert wird. Ein solches Hilfsmittel ist also eine Art Signalgerät, um das Signal der Annäherungsbereitschaft auszusenden. Dieses Signalgerät signalisiert allgemein eine Information, die es Personen erlaubt, diese Information, welche mittels Farben, Formen oder Helligkeitsunterschieden übermittelt wird, zu erkennen und entsprechend zu nutzen. Bei den roten, blinkenden Herzen ist als Information beispielhaft rot für die Farbe der Liebe und das Blinken für ein Herzklopfen gewählt.

Das Blinken eines solchen Herzens kann mittels einer Schaltvorrichtung aktiviert bzw. deaktiviert werden. Auf diese Weise kann die Information der vorhandenen oder eben der fehlenden Annährungsbereitschaft angezeigt werden.

Um darüber hinaus unterschiedlich starke Ausprägungen von Annäherungsbereitschaft anzeigen zu können, könnte man sich auch vorstellen mehrere solche blinkenden Herzen bei einer Person anzuordnen. Diese wären dann aber mittels der zugehörigen Schalteinrichtungen entsprechend aufwendig einzeln zu schalten.

Erfindungsgemäß ist ein Signalgerät zur Anzeige einer Annäherungsbereitschaft eines Benutzers des Signalgeräts zu einer anderen Person geschaffen, mit einer ersten Anzeigevorrichtung sowie einer zugehörigen ersten Schaltvorrichtung zum Schalten der ersten Anzeigenvorrichtung und mit mindestens einer weiteren Anzeigevorrichtung sowie einer zugehörigen weiteren Schaltvorrichtung zum Schalten der mindestens einen weiteren Anzeigevorrichtung. Dabei führt erfindungsgemäß ein Betätigen der ersten Schaltvorrichtung zu einem Einschalten der zugehörigen ersten Anzeigevorrichtung und zugleich zu einem Betätigen der zumindest einen weiteren Schaltvorrichtung. Gemäß der Erfindung führt also ein Betätigen bzw. Bewegen der ersten Schaltvorrichtung nicht nur zu einem Ein- bzw. Ausschalten der zugehörigen ersten Anzeigevorrichtung, sondern zugleich auch zu einem Betätigen bzw. Bewegen der zweiten Schaltvorrichtung. Diese zweite Schaltvorrichtung kann dann ihrerseits zu einem Ein- bzw. Ausschalten der zweiten Anzeigevorrichtung führen. So können erfindungsgemäß auf besonders einfache Weise Signalfolgen mehrerer Anzeigevorrichtungen erzeugt werden, ohne dass mittels der ersten Schaltvorrichtung zugleich eine zweite Anzeigevorrichtung anzusteuern wäre. Gemäß der Erfindung wird mit dem Betätigen der ersten Schaltvorrichtung nur zugleich mindestens eine zweite Schaltvorrichtung mitbetätigt.

Erfindungsgemäß ist eine einfache und intuitive Auswahl von Signalen vor allem dann möglich, wenn mehr als ein Signal auszuwählen und mittels der Auswahl auszusenden ist. Die Auswahl bei zwei Signalen ist erfindungsgemäß so, dass bei einem Schalten des ersten Signals mittels Betätigen der ersten Schalteinrichtung zugleich eine zweite Schalteinrichtung betätigt wird. Diese zweite Schalteinrichtung kann dann ihrerseits ein zweites Signal schalten. So ist erfindungsgemäß insbesondere ein Umschalten zwischen zwei Signalen in einer definierten Umschaltfolge möglich.

Bei mehr als zwei Signalen kann gemäß der Erfindung schnell und effizient das richtige Signal ausgesendet werden. Ein sofortiges Aussenden des richtigen Signals ist, vor allem wenn es um Annäherungsbereitschaft geht, von entscheidender Bedeutung. Wichtig ist auch, dass eine Möglichkeit geschaffen ist, dass das richtige Signal unmittelbar nach dem Benutzerwunsch angezeigt wird, um Verwirrungen und Missverständnisse zu vermeiden.

Bei der erfindungsgemäßen Lösung ist eine erste Schaltvorrichtung zum Aktivieren-Deaktivieren bzw. Ein-Ausschalten nur einer Anzeigevorrichtung vorgesehen. Als Anzeigevorrichtung ist bevorzugt ein Leuchtmittel geschaffen, welches mittels der Schaltvorrichtung ein- oder ausgeschaltet wird. Die Schaltvorrichtung ist bevorzugt ein Schalter oder Taster mittels dem zwei elektrisch leitende Materialien oder Halbleiterbauelemente eine elektrisch leitende Verbindung herstellen oder trennen. Die elektrisch leitende Verbindung mittels der die jeweils dazugehörige Anzeigevorrichtung eingeschaltet wird, ist mittels eines Schaltkontaktes hergestellt. Der Schaltkontakt der Schaltvorrichtung wird insbesondere mittels nur eines, sich bewegenden Schaltelements geschlossen. Dieses Schaltelement schlägt bevorzugt an dem einen Schaltkontakt an und betätigt dann gemäß der Erfindung insbesondere zugleich eine andere bzw. zweite Schaltvorrichtung.

Diese andere Schaltvorrichtung, ihrerseits vorzugsweise mit einem anderen Schaltkontakt gestaltet, schaltet eine zweite Anzeigevorrichtung. Ein Einschalten der ersten Anzeigenvorrichtung vom Benutzer mittels Betätigen der dafür vorgesehenen Schaltvorrichtung, schaltet somit zugleich vorzugsweise eine andere eingeschaltete Anzeigenvorrichtung mittels der dafür vorgesehenen Schaltvorrichtung aus.

Mittels der jeweiligen vorgesehenen Schaltvorrichtung der Anzeigevorrichtung zeigt das erfindungsgemäße Signalgerät insbesondere immer nur ein Signal, welches mittels einer der Anzeigevorrichtungen angezeigt wird. Sämtliche weiteren Anzeigevorrichtungen sind dann von dem Benutzer mit dem Betätigen der einen Schaltvorrichtung zugleich ausgeschaltet worden. Das Betätigen nur einer Schaltvorrichtung ermöglicht dem Benutzer bei der erfindungsgemäßen Lösung eine beliebige Schaltfolge der Anzeigevorrichtungen, beispielhaft wird nachfolgend 0 für das Ausschalten und 1, 2 und 3 für das Einschalten jeweiliger Anzeigevorrichtungen 1, 2 bzw. 3 verwendet. Dementsprechend ist bei drei Anzeigevorrichtungen beispielhaft die Schaltfolge 13201232310 möglich, also kann der Benutzer erfindungsgemäß eine vollkommen willkürliche Schaltfolge vornehmen.

Die Schaltfolge bei einem einfachen, gegebenenfalls aus anderen technischen Anwendungsgebieten allgemein bekannten Drehschalter wäre hingegen im Vergleich dazu 0123210123210. Je nach Drehrichtung des Drehschalters ist also nur ein nachfolgender zweiter Zustand der Anzeigevorrichtungen möglich.

Bei einem ebenfalls gegebenenfalls bekannten Taster zum Schalten mehrerer daran angeschlossener Anzeigevorrichtungen können diese Anzeigevorrichtungen nur die Zustände 01230123 annehmen. Somit ist auch hier eine zwingende Abfolge von aufeinanderfolgenden Signalen vorgegeben.

Die erfindungsgemäß geschaffene Möglichkeit einer willkürlichen Schaltfolge der Anzeigevorrichtung mittels der dafür vorgesehenen Schaltvorrichtungen führt zu einer einfacheren und schnelleren Bedienung durch den Benutzer. Dem Benutzer wird somit ermöglicht, mittels eines einzigen Schaltvorgangs die von ihm gewünschte Anzeigevorrichtung einzuschalten und zugleich unerwünschte Anzeigevorrichtungen auszuschalten.

Vorzugsweise ist das erfindungsgemäße Signalgerät so ausgebildet, dass das Betätigen der ersten Schaltvorrichtung nur zu einem Betätigen einer solchen weiteren Schaltvorrichtung führt, mittels der zuvor eine Anzeigevorrichtung eingeschaltet war, nicht aber zu einem Betätigen einer solchen weiteren Schaltvorrichtung führt, mittels der zuvor eine Anzeigevorrichtung ausgeschaltet war. Bei mehr als zwei Anzeigevorrichtungen wird damit beim Betätigen einer ersten Schaltvorrichtung die erste Anzeigevorrichtung ein- oder ausgeschaltet. Zugleich werden weitere Anzeigevorrichtungen mittels der jeweiligen weiteren Schaltvorrichtung ausgeschaltet. Durch die betätigte Schaltvorrichtung werden bei dieser Weiterbildung nur die Anzeigevorrichtungen ausgeschaltet, mittels deren zuvor eine Anzeigevorrichtung eingeschaltet worden war. Dies führt dazu, dass immer nur eine Anzeigevorrichtung ein Signal zeigt.

Darüber hinaus ist diese Lösung auch vorteilhaft hinsichtlich der Lebensdauer des erfindungsgemäßen Signalgeräts. Bei Schaltvorrichtungen wird nämlich der Vorgang des Ein- oder Ausschaltens als ein Schaltzyklus bezeichnet. Schaltvorrichtungen haben je nach Ausführungsart, Qualität und Last eine unterschiedliche Menge möglicher Schaltzyklen. Gemäß der Erfindung wird die Anzahl der Schaltzyklen minimiert, indem die anderen Schaltvorrichtungen dann nicht betätigt werden, wenn es nicht notwendig ist. Dies führt damit zu einer längeren Lebensdauer der Schaltvorrichtung. Alternativ kann die Ausführungsart, Qualität und Last der Schaltvorrichtung einer geringeren Anzahl an Schaltzyklen angepasst werden. So können Herstellungskosten eingespart werden.

In bevorzugter Weise führt ein nachfolgendes, insbesondere unmittelbar nachfolgendes bzw. erneutes Betätigen der ersten Schaltvorrichtung zu einem Ausschalten der zugehörigen ersten Anzeigevorrichtung und zugleich nicht zu einem Betätigen der zumindest einen, weiteren Schaltvorrichtung. Wenn ein und dieselbe Schaltvorrichtung nach dem Einschalten dieser Schaltvorrichtung von dem Benutzer betätigt wird, befinden sich an dem erfindungsgemäßen Signalgerät bereits alle weiteren Schaltvorrichtungen im ausgeschalteten Zustand. Daher ist keine Zustandsänderung dieser weiteren Schaltvorrichtungen notwendig, sondern lediglich ein Ausschalten der erstgenannten Anzeigevorrichtung, welche von dem Benutzer mittels der Schaltvorrichtung betätigt wurde. Die Schaltvorrichtung benötigt damit, wie bereits oben dargestellt, keinen besonderen Schaltzyklus, sondern einzelne Anzeigevorrichtungen können allein durch nochmaliges Betätigen der zugehörigen Schaltvorrichtung ausgeschaltet werden.

Erfindungsgemäß bevorzugt führt ferner ein allererstes Betätigen der ersten Schaltvorrichtung aus einem Ruhezustand des Signalgeräts heraus zu einem Einschalten der zugehörigen ersten Anzeigevorrichtung und zugleich nicht zu einem Betätigen der zumindest einen, weiteren Schaltvorrichtung. Eine weitere Schaltvorrichtung zu betätigen ist in diesem Fall nicht nötig, da, wenn das Signalgerät sich im Ruhezustand befindet, alle Anzeigegeräte ausgeschaltet sind, und somit kein Ausschalten der Anzeigegeräte mittels der Schaltvorrichtung notwendig ist. Wie oben bereits erwähnt wird für das Ein- und Ausschalten einzelner Anzeigevorrichtungen nicht etwa ein ganzer Schaltzyklus benötigt.

Vorteilhaft ist ferner die erste Anzeigevorrichtung mit einer ersten Leuchtquelle gestaltet, die zum Emittieren einer ersten Leuchtfarbe ausgebildet ist, und die mindestens eine weitere Anzeigevorrichtung mit einer weiteren Leuchtquelle gestaltet, die zum Emittieren einer weiteren, anderen Leuchtfarbe ausgebildet ist. Anzeigevorrichtungen in Signalgeräten sind vorteilhaft so gestaltet, dass sie eine möglichst gute Signalwirkung erzielen. Signalwirkung wird erzielt, wenn von dem Benutzer des Signalgerätes an die andere zu signalisierende Person ein möglichst eindeutiges und klar erkennbares Signal ausgesandt wird. Ein besonders gut erkennbares Signal ergibt sich vorteilhaft mittels einer Anzeigevorrichtung, die mit einer Leuchtquelle ausgestattet ist. Die Leuchtquelle emittiert dabei Licht, wobei dieses emittierte Licht vorteilhaft so gestaltet ist, dass eine Intensität bzw. Helligkeit des Lichtes an die Helligkeit der Umgebungssituation angepasst ist. Ist die Umgebungssituation beispielhaft eine sehr helle Umgebung, muss die Helligkeit der Leuchtquelle dementsprechend hoch sein, um eine gute Signalwirkung zu erzielen. Eine gute Signalwirkung ist grundsätzlich mittels einer helleren Leuchtquelle zu erreichen. Zu beachten ist dabei, dass die Helligkeit ein subjektives Empfinden ist und ein zu helles Signal als aufdringlich und blendend empfunden werden kann. Die Signalwirkung ist außerdem von der Eindeutigkeit des Signals abhängig. Die Eindeutigkeit des Signals kann vorteilhaft mittels unterschiedlicher Leuchtfarben gesteuert werden, die die Leuchtquellen der Anzeigevorrichtung emittieren. Besonders vorteilhaft ist dabei, die Leuchtfarbe so zu wählen, dass sie bereits bekannte Lichtmuster aufgreift. Ein bekanntes Lichtmuster ist beispielhaft mit den Leuchtfarben rot und grün gegeben, welche vom Straßenverkehr allseits bekannt sind. Die Signalwirkung ist bei Anzeigevorrichtungen besonders vorteilhaft ausgeprägt, wenn für das jeweilige zu übermittelnde Signal eine eigene Leuchtfarbe ausgewählt wird. Die Leuchtfarbe wird von der Wellenlänge des emittierten Lichts bestimmt. Beispielhaft wird Licht mit der Wellenlänge 610 bis 760 Nanometer als rot und die Wellenlänge 500 bis 570 Nanometer als grün wahrgenommen.

Durch die Farbe grün kann so signalisiert werden, dass Annäherungsbereitschaft vorliegt, oder eine Emotion ausgedrückt werden, wie beispielhaft Freude oder ein positives Gefühl. Ein negatives Gefühl oder keine Annäherungsbereitschaft kann mit der roter Farbe signalisiert werden. Ferner kann vorteilhaft Ungewissheit über die Emotion mittels einer Farbe zwischen orange und gelb angegeben werden.

Ferner sind besonders vorteilhaft, die Leuchtquellen jeweils mit einer lichtemittierenden Diode (LED) gestaltet. Eine lichtemittierende Diode bzw. LED zeichnet sich besonders durch einen geringen Energieverbrauch, durch eine hohe Anzahl möglicher Schaltvorgänge und eine lange Lebensdauer aus. Eine lange Lebensdauer der LED ist vorteilhaft, da somit die Leuchtquelle nicht auswechselbar gestaltet sein muss. Dadurch wird eine Kostenersparnis erreicht, da insbesondere auch keine Halterung bzw. Fassung für die LED notwendig ist. Eine LED weist einen geringen Energieverbrauch bei einem hohen Lichtstrom auf und ist daher energiesparend, wodurch sich eine längere Leuchtdauer der LED bei gleicher Energiemenge ergibt. Wenn die Energiemenge von einem Energiespeicher beispielhaft einer elektrischen Batterie gespeichert wird, kann somit ein kleinerer Energiespeicher bei gleicher Leuchtdauer der LED verwendet werden.

Erfindungsgemäß sind vorteilhaft ferner die Schaltvorrichtungen jeweils mit einem Taster gestaltet, der bei einem ersten Betätigen zu einem Einschalten der zugehörigen Anzeigevorrichtung und bei einem nachfolgenden zweiten Betätigen zu einem Ausschalten der zugehörigen Anzeigevorrichtung führt. Ein Taster ist ein Bedienelement, welches durch Drücken auf die Tastfläche betätigt wird und meist mittels einer mechanischen Feder anschließend wieder in die Ausgangslage zurückkehrt. Das Zurückkehren in die Ausgangslage unterscheidet den Taster von Schaltern, welche in der jeweiligen Schaltposition verbleiben, wodurch man an der Schaltposition optisch den Ein- oder Ausschaltzustand erkennen kann. Den Ein- oder Ausschaltzustand zu erkennen ist vorliegend gar nicht notwendig, da dieser mittels der Anzeigevorrichtung an dem Signalgerät ohnehin erkennbar ist und nicht an dem Taster erkannt werden muss. Da an dem Taster nicht ein Zustand der Anzeigevorrichtung erkannt werden muss, kann der Benutzer in vorteilhafter Weise, ohne auf den Ein- oder Ausschaltzustand der Schaltvorrichtung zu achten, den Schalter betätigen. Die Betätigung des Tasters ist daher auf einfaches Drücken auf den Taster reduziert, wobei ein erstes Betätigen die zugehörige Anzeigevorrichtung einschaltet und ein weiteres Drücken die zugehörige Anzeigevorrichtung ausschaltet.

In bevorzugter Weise ist an einem zum Signalgerät gehörenden Gehäuse eine Befestigungsvorrichtung zum ortsfesten Befestigen des Signalgeräts an einem Kleidungsstück des Benutzers vorgesehen. Der Benutzer kann so insbesondere das Signalgerät derart ortsfest befestigen, dass es für andere Personen vorteilhaft zu sehen ist und somit eine gute Signalwirkung entfaltet. Die Befestigungsvorrichtung ist dabei vorzugsweise so ausgebildet, dass das Signalgerät nicht dauerhaft, sondern ausschließlich während einer gewünschten Benutzungsdauer an dem Kleidungsstück des Benutzers ortsfest befestigt ist. Die Befestigungsvorrichtung ist vorteilhaft mittels eines an dem Signalgerät befindlichen Befestigungsstifts mit einem lösbaren Befestigungshalter gestaltet. Das Kleidungsstück wird dabei von dem Befestigungsstift durchstochen und mittels des Befestigungshalters in einer formschlüssigen Verbindung fixiert, vorteilhafter ist auch eine kraftschlüssige Verbindung. Alternativ ist die Befestigungsvorrichtung vorteilhaft mittels eines Befestigungsclips gestaltet. Bei Befestigungselementen kann man zwischen aktiv zu öffnenden Befestigungselementen und nicht aktiv zu öffnenden Befestigungselementen unterscheiden. Ein nicht aktiv zu öffnender Befestigungsclip wird mittels einer elastischen Verformung geöffnet, die vom Einführen eines Gegenstandes, hier dem Kleidungsstück herrührt. Das Kleidungsstück wird nach dem Einführen mittels der Rückstellkraft des elastisch verformten Befestigungselements geklemmt. Ein aktiv zu öffnender Befestigungsclip wird insbesondere mittels Drücken auf das Betätigungselement geöffnet, anschließend wird das Kleidungsstück zwischen das Gehäuse des Signalgeräts und den Befestigungsclip gegeben und mittels der Rückstellkraft eines federähnlichen Elementes haftreibend geklemmt.

Erfindungsgemäß bevorzugt ist die Befestigungsvorrichtung mittels einer das Gehäuse durchdringenden Durchgangsöffnung gestaltet. Diese Durchgangsöffnung ist so gestaltet, dass der Benutzer durch diese Durchgangsöffnung hindurch ein Befestigungselement, beispielhaft ein Kautschukband, Lederband oder eine Halskette, hindurchführen kann. Mittels des hindurchgeführten Befestigungselements kann der Benutzer das Signalgerät wie einen Schmuckanhänger unterhalb des Kopfes platzieren. Dieser Bereich unterhalb des Kopfes wird bei einem Blickkontakt, bei dem meist Personen andere Personen vom Kopf abwärts betrachten, besonders frühzeitig wahrgenommen. Mittels des frühzeitigen Wahrnehmens kann das Signalgerät die Signalwirkung besonders vorteilhaft entfalten und zeigt somit einem Betrachter frühzeitig, ob die verwendende Person annäherungsbereit ist. Die Person signalisiert dabei nicht nur Annäherungsbereitschaft, sondern mittels der zentralen Lage auch die Wichtigkeit ihres Anliegens, was auf die annäherungsbereite Person einen positiven Einfluss haben kann.

Ein erfindungsgemäßes Verfahren zum Anzeigen einer Annäherungsbereitschaft eines Benutzers eines Signalgerätes zu einer anderen Person, insbesondere an einem Signalgerät, ist mit den Schritten gestaltet: Anzeigens eines Signals an einer ersten Anzeigevorrichtung sowie Schalten einer zugehörigen ersten Schaltvorrichtung und Anzeigen eines Signals an mindestens einer weiteren Anzeigevorrichtung sowie Schalten einer zugehörigen weiteren Schaltvorrichtung, gekennzeichnet durch die Schritte: Betätigen der ersten Schaltvorrichtung, einem damit ausgelösten Einschalten der zugehörigen ersten Anzeigevorrichtung und einem damit zugleich ausgelösten Betätigen der zumindest einen weiteren Schaltvorrichtung.

Nachfolgend werden Ausführungsbeispiele der erfindungsgemäßen Lösung anhand der beigefügten schematischen Zeichnung näher erläutert. Es zeigt:
- Fig. 1: eine Draufsicht eines ersten Ausführungsbeispiels eines erfindungsgemäßen Signalgeräts,
- Fig. 2: eine Seitenansicht des ersten Ausführungsbeispiels eines Signalgeräts mit einem ersten Ausführungsbeispiel eines Befestigungselements und
- Fig. 3: eine Seitenansicht des ersten Ausführungsbeispiels eines Signalgeräts mit einem zweiten Ausführungsbeispiel eines Befestigungselementes.

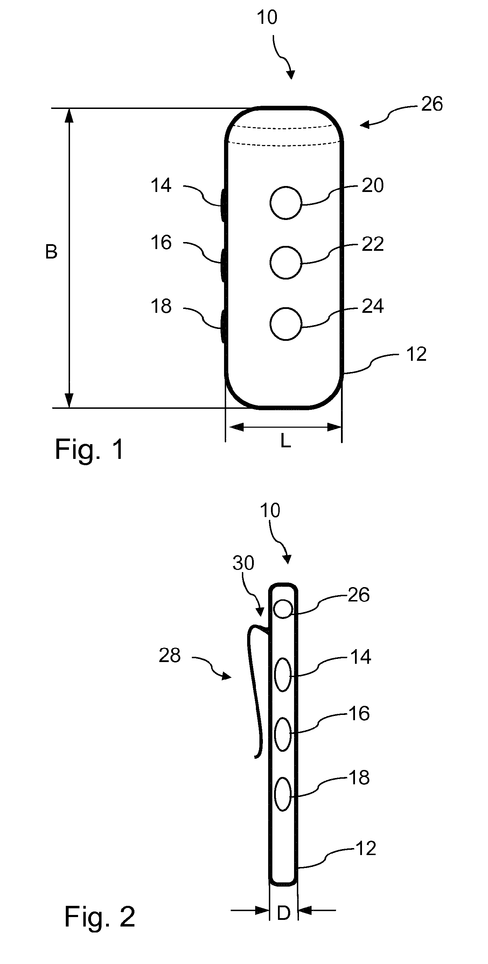

In Fig. 1 ist ein Signalgerät 10 mit einem im Wesentlichen quaderförmigen an den Ecken abgerundeten Gehäuse 12 in der Vorderansicht dargestellt. Das Gehäuse hat dabei eine Länge L eine Breite B und eine in Fig. 2 dargestellte Dicke D. Um ein schlankes Design zu gewährleisten, ist die Dicke D dabei, angepasst an die Bedienbarkeit von Schaltvorrichtungen 14, 16 und 18, so gering als möglich gewählt.

Die Schaltvorrichtungen 14, 16 und 18 sind als Taster ausgeführt und an der, von der Draufsicht ausgehenden linken Längsseite angebracht. Das Anbringen an der von der Draufsicht ausgehenden linken Längsseite ermöglicht dem Benutzer, bei Bedienung des Signalgeräts 10 mit der rechten Hand, ein vorteilhaftes Betätigen der Schaltvorrichtungen 14, 16 und 18 mit seinem Daumen. Die Schaltvorrichtungen 14, 16 und 18 sind dabei, je nach Ausführungsart des Signalgeräts, wie auch das Gehäuse 12, aus Kunststoff, Metall oder Glas ausgeführt. Auch ein Verwenden mehrere unterschiedlicher Materialien für die Schaltvorrichtungen 14, 16 und 18 bzw. das Gehäuse 12 ist denkbar.

An dem Gehäuse 12 befinden sich von oben betrachtet an einer Längsachse des Gehäuses 12 angeordnet Anzeigevorrichtungen 20, 22, und 24. Die Anzeigevorrichtungen 20, 22, und 24 sind nicht unmittelbar nebeneinander angeordnet, sondern zwischen den Anzeigevorrichtungen 20, 22, und 24 ist je ein Abstand, mittels dessen ein an eine Verkehrsampel angelehntes Aussehen erzielt ist. Mittels des an die Verkehrsampel angelehnten Aussehens und auch unterstützt durch die quaderförmige Form des Gehäuses 12, wird der zu signalisierenden Person eine vertraute Optik angeboten. Eine vertraute Optik der Anzeigevorrichtungen 20, 22, und 24 wird des Weiteren durch die Signalfarben rot der ersten Anzeigevorrichtung 20, gelb bzw. orange der zweiten Anzeigevorrichtung 22 und grün der dritten Anzeigevorrichtung 24 erreicht. Für rot ist vorliegend ein Wellenlängenbereich von 700 bis 630 nm, für orange ein Wellenlängenbereich von 630 bis 590 nm, für gelb ein Wellenlängenbereich von 590 bis 560 nm und für grün ein Wellenlängenbereich von 560 bis 490 nm gewählt.

Die erste Anzeigevorrichtung 20 ist der zugehörigen ersten Schaltvorrichtung 14 zugeordnet, wie auch die zweite Anzeigevorrichtung 22 der zweiten Schaltvorrichtung 16 und die dritte Anzeigevorrichtung 24 der dritten Schaltvorrichtung 18 zugeordnet ist. Die Schaltvorrichtungen 14, 16, und 18 befinden sich auf der jeweils gleichen Querachse, wie die zugeordneten Anzeigevorrichtungen 20, 22 und 24, was die Bedienfreundlichkeit der Schaltvorrichtungen erhöht. Mittels der ersten Schaltvorrichtung 14 wird die zugehörige erste Anzeigevorrichtung 20 eingeschaltet und die nicht betätigten Schaltvorrichtungen 16 und 18 ausgeschaltet, sofern sich diese im eingeschalteten Zustand befunden haben. So wird sichergestellt, dass nur von einer der Anzeigevorrichtungen 20, 22 und 24 ein Signal auf dem Gehäuse 12 anzeigt wird.

Ein Betätigen der ersten Schaltvorrichtung 14 aus dem Ruhezustand des Signalgeräts 10 führt zu einem Einschalten der dazugehörigen ersten Anzeigevorrichtung 20 mittels eines, hier nicht dargestellten, ersten Schaltkontakts. Dieser erste Schaltkontakt ist der ersten Schaltvorrichtung 14 zugeordnet und stellt kurzzeitig, während der Dauer des Drückens, eine elektrische Verbindung zwischen zwei Leitern her. Der Schaltkontakt schließt damit einen, hier nicht dargestellten, ersten elektrischen Stromkreis. Das Schließen des ersten elektrischen Stromkreises wird von einer, hier nicht dargestellten, elektrischen Schaltung, welche vorteilhaft mittels eines integrierten Schaltkreises realisiert ist, als ein elektrisches Schaltsignal erkannt. Diese elektrische Schaltung schließt dann einen, für die Anzeigevorrichtung 20 vorgesehenen, ersten Anzeigestromkreis. Aufgrund des im geschlossenen ersten Anzeigestromkreis fließenden Stroms wird die Anzeigevorrichtung 20 mit Strom versorgt, wobei der elektrische Strom in Licht der gewünschten Wellenlänge der ersten Anzeigevorrichtung 20 umgewandelt wird.

Bei einem anschließende Betätigen einer anderen Schaltvorrichtung, beispielhaft der zweiten Schaltvorrichtung 16, wird ein, hier nicht dargestellter, zweiter Stromkreis mittels eines, hier nicht dargestellten, zweiten Schaltkontakts kurzzeitig geschlossen. Dieser zweite Schaltkontakt übermittelt an die elektrische Schaltung ein elektrisches Signal zum Schließen eines zweiten Anzeigestromkreises, wodurch die zweite Anzeigevorrichtung 22 eingeschaltet wird. Zugleich wird mittels der elektrischen Schaltung überprüft, ob ein anderer Anzeigestromkreis geschlossen ist und welcher. Ist, wie nun vorliegend, der erste Anzeigestromkreis geschlossen und damit die erste Anzeigevorrichtung 20 eingeschaltet, so wird diese erste Anzeigevorrichtung 20 durch Trennen des ersten Anzeigestromkreises mittels der elektrischen Schaltung ausgeschaltet. Auch bei einem anschließenden Betätigen einer weiteren, anderen Schaltvorrichtung 14 oder 18 ist das Vorgehen wie vorher beschrieben.

Bei einem anschließenden Betätigen der gleichen Schaltvorrichtung 16 wird erneut der zweite Schaltkontakt kurzzeitig betätigt. Dieser zweite Schaltkontakt schließt den zweiten Schaltkreis, mittels dessen ein elektrisches Signal an die Schaltung übermittelt wird. Die Schaltung wechselt daraufhin den bestehenden Zustand des zweiten Anzeigeschaltkreises und öffnet diesen. Durch das Öffnen des zweiten Anzeigeschaltkreises wird, wenn wie vorliegend nur der zweite Anzeigenschaltkreis geschlossen war, die zweite Anzeigevorrichtung 22 wieder ausgeschaltet und somit das Signalgerät 10 in den Ruhezustand versetzt.

Wenn, in eigentlich missverständlicher Weise, zwei der Schaltvorrichtungen 14, 16 und 18 gleichzeitig betätigt werden, ist für die elektrische Schaltung das von dem letzten geschlossenen Schaltkontakt ausgehende elektrische Signal ausschlaggebend.

Schließlich befindet sich noch durch das Gehäuse 12 hindurch im oberen Bereich des Signalgeräts 10, von der linken Längsseite zur rechten Längsseite, eine durchgehende zylinderförmige, leicht gebogene Durchgangsöffnung 26. Durch diese Durchgangsöffnung 26 hindurch kann ein hier nicht dargestelltes Befestigungsmittel, beispielhaft ein Kautschukband, ein Lederband oder eine Halskette, hindurchgegeben werden. Mit dem Befestigungsmittel besteht die Möglichkeit, das Signalgerät 10 am Hals eines Benutzers zu befestigen. Um dem Benutzer ein besseres Tragegefühl zu ermöglichen und dem Benutzer ein leichteres Hineinführen des Befestigungsmittels zu ermöglichen, ist die Durchgangsöffnung 26 nicht gerade, sondern gering in Richtung des unteren Bereichs des Signalgeräts 10 gekrümmt.

In Fig. 2 ist eine Seitenansicht eines ersten Ausführungsbeispiels eines Signalgerätes 10 mit einem ersten Ausführungsbeispiel einer Befestigungsvorrichtung 28 dargestellt. Die Befestigungsvorrichtung 28 öffnet sich zu dem unteren Bereich des Signalgerätes hin und ist auf der Rückseite des Signalgerätes 10 ortsfest mit dem Gehäuse 12 biegesteif verbunden. Die biegesteife Verbindung ist mittels einer Erhöhung der Materialdicke im Anschlussbereich 30 der Befestigungsvorrichtung 28 geschaffen. Die Befestigungsvorrichtung 28 hingegen ist definiert biegeschwach ausgeführt. Mittels der Biegeschwachheit der Befestigungsvorrichtung 28 wird ein erwünschtes, reversibles Verbiegen derselben möglich. Mit dem Verbiegen der klammerförmigen bzw. clipförmigen Befestigungsvorrichtung 28 wird eine erwünschte Haltekraft erzielt. Diese Haltekraft baut eine Haftreibung zwischen der Befestigungsvorrichtung 28 und einem dort eingeführten, hier nicht dargestellten, einzuklemmenden Objekt, beispielhaft einer Kleidung, und dem Signalgerät 10 auf.

Um das Signalgerät 10 zu bedienen sind auf der dargestellten linken Längsseite die bereits in Fig. 1 beschriebenen Schaltvorrichtungen 14, 16 und 18 angebracht. Diese Schaltvorrichtungen 14, 16 und 18 sind vorteilhaft oval und mittig auf der Längsachse der linken Längsseite angebracht und heben sich etwas wie in Fig. 1 erkennbar von dem Gehäuse 12 ab. Die in dem Gehäuse 12 angebrachte Durchgangsöffnung 26 ist hier im oberen Bereich dargestellt und befindet sich auf derselben Längsachse wie die Schaltvorrichtungen 14, 16 und 18.

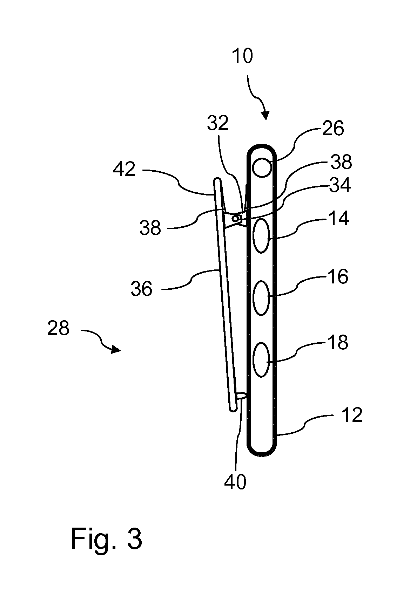

In Fig. 3 ist eine Seitenansicht eines zweiten Ausführungsbeispiels einer Befestigungsvorrichtung 28 eines Signalgerätes 10 dargestellt. Das zweite Ausführungsbeispiel der Befestigungsvorrichtung 28 ist wie das erste Ausführungsbeispiel in Fig. 2 nach unten zu öffnen. Dabei ist aber das zweite Ausführungsbeispiel eine aktiv zu öffnende Befestigungsvorrichtung 28. Diese aktiv zu öffnende Befestigungsvorrichtung 28 umfasst einen biegesteif, ortsfest an die Rückseite des Gehäuses angebrachte Achsenhalterung 32, eine damit verbundene Drehachse 34 und ein Hebelelement 36. Dieses Hebelelement 36 wird mittels eines federähnlichen Elements bzw. einer Rückstellfeder 38 um die Drehachse 34 rotierend an das Gehäuse 12 des Signalgeräts 10 gepresst. Auf dem Gehäuse 12 des Signalgeräts 10 liegt dabei ein Halteelement 40 auf. Dieses Halteelement 40 des Hebelelementes 36 führt zusätzlich zur Haftreibung, mittels des angepressten Hebelelementes 36, zu einem Formschluss und verbessert somit die Klemmwirkung des Hebelelementes 36.

Um das Hebelelement 36 aktiv zu öffnen, muss der Benutzer auf einen Drückbereich 42 drücken, wodurch das Hebelelement 36 um die Drehachse 34 rotiert und sich die Befestigungsvorrichtung 28 dabei öffnet. Im geöffneten Zustand kann so ein Objekt, beispielhaft Kleidung, zwischen das Hebelelement 36 und das Gehäuse 12 eingeführt werden. Nach dem Einführen des Objekts wird der Druck vom Benutzer verringert und das Hebelelement 36 rotiert mittels der Spannkraft der Rückstellfeder 38 in entgegengesetzter Drehrichtung. Aufgrund dieses Rotierens wird das eingeführte Objekt zwischen dem Hebelelement 36 und dem Gehäuse 12 des Signalgeräts 10 eingeklemmt. Die Klemmwirkung des Hebelelements 36 wird dabei durch die Größe der Spannkraft der Rückstellfeder 38 und den Formschluss von dem Halteelement 40 beeinflusst.

### Bezugszeichenliste

- 10: Signalgerät
- 12: Gehäuse
- 14: Schaltvorrichtung
- 16: Schaltvorrichtung
- 18: Schaltvorrichtung
- 20: Anzeigevorrichtungen
- 22: Anzeigevorrichtungen
- 24: Anzeigevorrichtungen
- 26: Durchgangsöffnung
- 28: Befestigungsvorrichtung
- 30: Anschlussbereich
- 32: Achsenhalterung
- 34: Drehachse
- 36: Hebelelement
- 38: Rückstellfeder
- 40: Halteelement
- 42: Drückbereich

## Patentansprüche

1. Signalgerät (10) zur Anzeige einer Annäherungsbereitschaft eines Benutzers des Signalgeräts (10) zu einer anderen Person mit einer ersten Anzeigevorrichtung (20) sowie einer zugehörigen ersten Schaltvorrichtung (14) zum Schalten der ersten Anzeigenvorrichtung (20) und mit mindestens einer weiteren Anzeigevorrichtung (22, 24) sowie einer zugehörigen weiteren Schaltvorrichtung (16, 18) zum Schalten der mindestens einen weiteren Anzeigevorrichtung (22, 24),
**dadurch gekennzeichnet, dass** ein Betätigen der ersten Schaltvorrichtung (14) zu einem Einschalten der zugehörigen ersten Anzeigevorrichtung (20) und zugleich zu einem Betätigen der zumindest einen weiteren Schaltvorrichtung (14) führt.

2. Signalgerät (10) nach Anspruch 1,
**dadurch gekennzeichnet, dass** das Betätigen der ersten Schaltvorrichtung (14) nur zu einem Betätigen einer solchen weiteren Schaltvorrichtung (16, 18) führt, mittels der zuvor eine Anzeigevorrichtung (22, 24) eingeschaltet war, nicht aber zu einem Betätigen einer solchen weiteren Schaltvorrichtung (16, 18) führt, mittels der zuvor eine Anzeigevorrichtung (22, 24) ausgeschaltet war.

3. Signalgerät (10) nach Anspruch 1 oder 2,
**dadurch gekennzeichnet, dass** ein nachfolgendes Betätigen der ersten Schaltvorrichtung (14) zu einem Ausschalten der zugehörigen ersten Anzeigevorrichtung (20) und zugleich nicht zu einem Betätigen der zumindest einen weiteren Schaltvorrichtung (16, 18) führt.

4. Signalgerät (10) nach einem der Ansprüche 1 bis 3,
**dadurch gekennzeichnet, dass** ein allererstes Betätigen der ersten Schaltvorrichtung (14) aus einem Ruhezustand des Signalgeräts (10) heraus zu einem Einschalten der zugehörigen ersten Anzeigevorrichtung (20) und zugleich nicht zu einem Betätigen der zumindest einen weiteren Schaltvorrichtung (16, 18) führt.

5. Signalgerät (10) nach einem der Ansprüche 1 bis 4,
**dadurch gekennzeichnet, dass** die erste Anzeigevorrichtung (20) mit einer ersten Leuchtquelle gestaltet ist, die zum Emittieren einer ersten Leuchtfarbe ausgebildet ist, und die mindestens eine weitere Anzeigevorrichtung (22, 24) mit einer weiteren Leuchtquelle gestaltet ist, die zum Emittieren einer weiteren, anderen Leuchtfarbe ausgebildet ist.

6. Signalgerät (10) nach Anspruch 5,
**dadurch gekennzeichnet, dass** die Leuchtquellen jeweils mit einer lichtemittierenden Diode (LED) gestaltet sind.

7. Signalgerät (10) nach einem der Ansprüche 1 bis 6,
**dadurch gekennzeichnet, dass** die Schaltvorrichtungen (14, 16, 18) jeweils mit einem Taster gestaltet sind, der bei einem ersten Betätigen zu einem Einschalten der zugehörigen Anzeigevorrichtung (20, 22, 24) und bei einem nachfolgenden zweiten Betätigen zu einem Ausschalten der zugehörigen Anzeigevorrichtung (20, 22, 24) führt.

8. Signalgerät (10) nach einem der Ansprüche 1 bis 7,
**dadurch gekennzeichnet, dass** an einem zum Signalgerät (10) gehörenden Gehäuse eine Befestigungsvorrichtung (28) zum ortsfesten Befestigen des Signalgeräts (10) an einem Kleidungsstück des Benutzers vorgesehen ist.

9. Signalgerät (10) nach Anspruch 8,
**dadurch gekennzeichnet, dass** die Befestigungsvorrichtung (28) mittels einer das Gehäuse (12) durchdringenden Durchgangsöffnung (26) gestaltet ist.

10. Verfahren zum Anzeigen einer Annäherungsbereitschaft eines Benutzers eines Signalgeräts (10) zu einer anderen Person, insbesondere an einem Signalgerät (10) nach einem der Ansprüche 1 bis 9, mit den Schritten:
- Betätigen einer ersten Schaltvorrichtung (14) eines Signalgerätes (10) im Ruhezustand
- Anzeigen eines Signals an einer ersten Anzeigevorrichtung (20)
- einem damit zugleich ausgelösten Betätigen der zumindest einen weiteren Schaltvorrichtung (16)
- Betätigen einer zweiten Schaltvorrichtung (16) eines Signalgerätes (10)
- Anzeigen eines Signals an einer zweiten Anzeigevorrichtung (22)
- einem damit zugleich ausgelösten Betätigen der zumindest einen weiteren ersten aktivierten Schaltvorrichtung (14, 16, 18).
- Betätigen einer zweiten Schaltvorrichtung (16) eines Signalgerätes
- nicht Anzeigen eines Signals an dem Signalgerät (10)
